# EUROPEAN PATENT SPECIFICATION

(11) **EP 4 207 747 B1**
(45) Date of publication and mention of the grant of the patent: **23.04.2025**
(21) Application number: 21860811.5
(22) Date of filing: 26.02.2021
(51) Int. Cl.: G02B 27/01, G02B 27/02, H04N 5/64, G09F 9/00, G09F 21/02

(54) **HEAD-MOUNTED DISPLAY**
KOPFMONTIERTE ANZEIGE
VISIOCASQUE

(30) Priority: 31.08.2020 JP 2020145866
(43) Date of publication of application: 05.07.2023
(73) Proprietor: JVCKenwood Corporation, Yokohama-shi, Kanagawa 2210022 (JP)
(72) Inventor: OKA, Hisashi, Yokohama-shi, Kanagawa 221-0022 (JP)
(74) Representative: Wimmer, Hubert
(86) International application number: PCT/JP2021/007308
(87) International publication number: WO 2022/044379

(56) References cited:
- JP-A- 2019 537 287
- JP-U- 3 213 221
- KR-B1- 101 892 253
- US-A1- 2019 227 329
- US-B1- 8 605 008

## Description

### TECHNICAL FIELD

The present disclosure relates to a head-mounted display.

### BACKGROUND ART

JP 1997-280247 A discloses a head-mounted display provided with a suspender mounted on a user's head, a display device for displaying images, and a connecting member for connecting the suspender and the display device. The connecting member has a two-stage hinge element that allows the connecting member to rotate freely with respect to the suspender and the display device to rotate freely with respect to the connecting member. After mounting the suspender to the user's head, the user can move the display device to a position in front of the eyes by grasping the display device by hand and rotating the connecting member with respect to the suspender.

KR 101 892 253 B1 relates to a head-mounted display having a main body with a display device mounted and a head mounting unit that is attached to one side of the main body and is worn on the head of the user. The head mounting unit includes a head wearing member worn on the head of the user, a hinge coupling member hinged to the head wearing member, an angle adjusting member coupled to the main body and movably coupled to the hinge coupling member, and a specific locking member provided on the head fitting member for locking the angle adjusting member.

### [SUMMARY OF THE INVENTION]

However, a gap sometimes occurs between the display device and the user's face in the technique disclosed in Patent Literature 1. There is a problem that external light entering through a gap between the display device and the user's face causes a noise component, which leads to a degradation in the quality of a display image.

A first aspect of a present embodiment has been made in view of the above problem, and an object of the present embodiment is to provide a head-mounted display capable of improving the quality of a display image by suppressing the influence of external light.

According to the invention, a head-mounted display according to claim 1 is provided.

The first aspect of a present embodiment makes it possible to achieve the effect that the quality of a display image can be improved by suppressing the influence of external light.

### [BRIEF DESCRIPTION OF THE DRAWINGS]

[FIG. 1] FIG. 1 is a right-side view illustrating a head-mounted display mounted on a user's head.
[FIG. 2] FIG. 2 is a rear view of the display device.
[FIG. 3] FIG. 3 is a right side view of the display device.
[FIG. 4] FIG. 4 is a plan view of the display device.
[FIG. 5] FIG. 5 is a right side view illustrating a position of the center of gravity of the display device and a rotation moment acting on the display device.
[FIG. 6] FIG. 6 is a plan view illustrating a position of the center of gravity of the display device.
[FIG. 7] FIG. 7 is a schematic view of a cross section of the display device along the AA line illustrated in FIG. 2.
[FIG. 8A] FIG. 8A is a diagram illustrating an upper cushion part and a lower cushion part.
[FIG. 8B] FIG. 8B is a diagram illustrating the upper cushion part and the lower cushion part.
[FIG. 8C] FIG. 8C is a diagram illustrating the upper cushion part and the lower cushion part.
[FIG. 9A] FIG. 9A is a diagram illustrating a state of a cushion material when the head-mounted display is mounted on the user's head.
[FIG. 9B] FIG. 9B is a diagram illustrating a state of the cushion material when the head-mounted display is mounted on the user's head.
[FIG. 9C] FIG. 9C is a diagram illustrating a state of the cushion material when the head-mounted display is mounted on the user's head.

### [MODES FOR CARRYING OUT THE INVENTION]

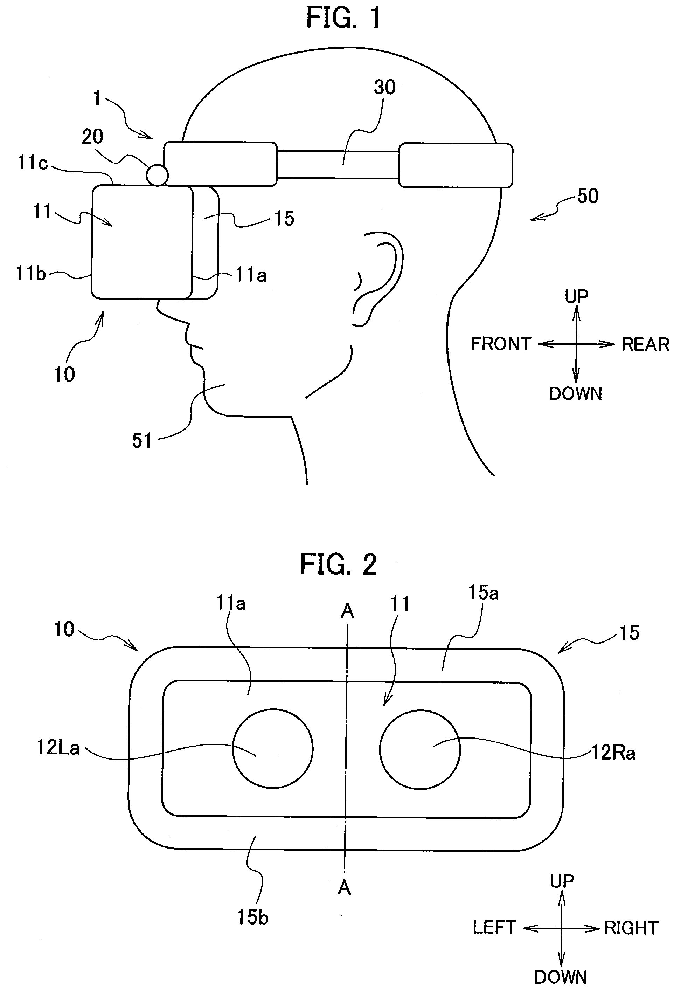

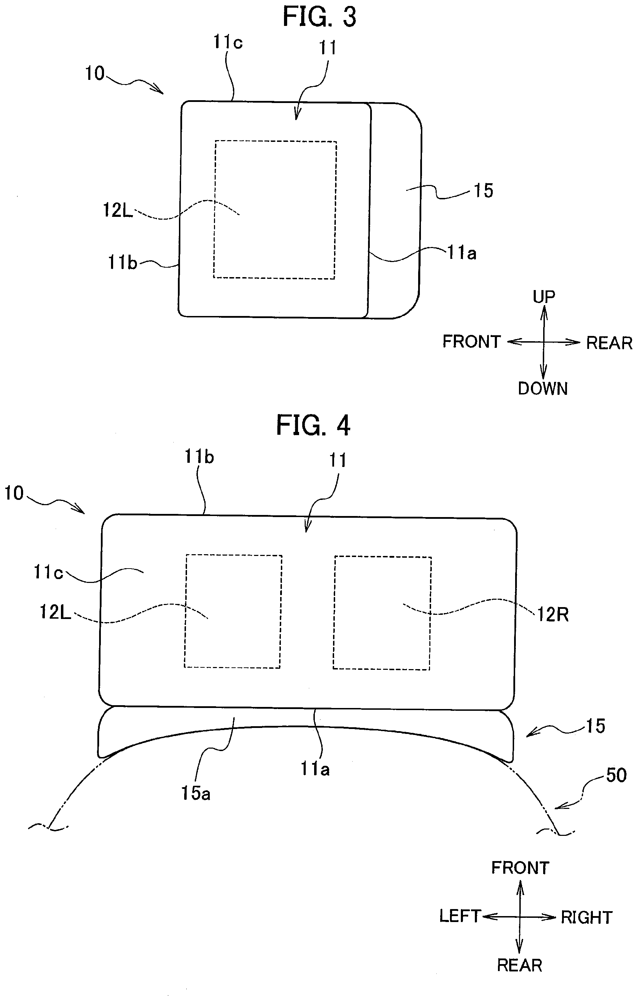

A configuration of a head-mounted display 1 according to the present embodiment will be described below with reference to FIGS. 1 to 4. The head-mounted display 1 is a device mounted on a head 50 so as to cover the left and right eyes of a user, and displays prescribed information to the user. For example, the head-mounted display 1 displays a stereoscopic image to the user by displaying parallax images corresponding to the left and right eyes as virtual images. In the following description, the up-down direction, the front-rear direction, and the left-right direction of the head-mounted display 1 are defined with reference to the up-down direction, the front-rear direction, and the left-right direction of the head 50 in a state in which the head-mounted display 1 is mounted.

The head-mounted display 1 includes a display device 10, a hinge 20, and a headband 30.

The display device 10 generates parallax images corresponding to the left and right eyes of the user and guides the display light corresponding to the parallax images to the user's eyes. The display device 10 includes a device body 11, left and right display units 12L and 12R, and a cushion material 15.

The device body 11 is formed of, for example, a rectangular shaped box that is horizontally long in the left-right direction of the head 50. The device body 11 may be curved to correspond to the curve of a user's face 51. The device body 11 is formed of a material such as synthetic resin from the standpoint of strength and weight reduction.

The rear-end side of the device body 11 is an opposing part 11a facing the user's face 51. In contrast, the front-end side of the device body 11 is a protruding part 11b separated from the opposing part 11a to the front by a certain distance. Space is provided between the opposing part 11a and the protruding part 11b to accommodate the left and right display units 12L and 12R.

The left and right display units 12L and 12R are accommodated inside the device body 11. The left and right display units 12L and 12R corresponding to the left and right eyes of the user are arranged spaced apart in the left-right direction. The left display unit 12L is placed to the left side from the center of the device body 11, and the right display unit 12R is placed to the right side from the center of the device body 11.

The left and right display units 12L and 12R display images corresponding to the right and left eyes (parallax images). That is, the left display unit 12L displays a display image corresponding to the left eye, and the right display unit 12R displays a display image corresponding to the right eye.

Each of the display units 12L and 12R is provided with a display element and an optical system. The display element generates a display image and outputs display light corresponding to the display image. For example, a display panel such as a liquid crystal panel or an organic electro-luminescence (EL) panel can be used as the display element.

The optical system guides display light output by the display element to the user's eye as a display image. The optical system includes one or more optical elements selected from a group including mirrors, lenses, and the like. Lenses 12La and 12Ra arranged so as to be positioned in front of the user's eyes are provided on the opposing part 11a facing the user's face 51 in the device body 11, and display light passing through the lenses 12La and 12Ra is guided to the user's eyes. When the user wears the head-mounted display 1, the display device 10 is brought into contact with the user's face 51 so as to cover the user's eyes. The user can view virtual images that are the display images generated by the display units 12L and 12R, at the front side in front of the user.

The configuration of the display units 12L and 12R is an example and the display units 12L and 12R are not limited to this configuration. For example, the display units 12L and 12R need not have respective display elements, and may be configured to share a single display element. In this case, the single display element need not be built into the device body 11 and an external display device may be utilized.

The cushion material 15 is provided over the entire peripheral edge of the opposing part 11a. When the head-mounted display 1 is mounted on the user's head 50, the cushion material 15 becomes a contact area with the user's face 51. The cushion material 15 is formed of a material with elasticity such as polyurethane foam.

The head-mounted display 1 needs to be mounted in a position in front of the user's eyes and further needs to be mounted in a position close to the user's eyes. When the device body 11 comes into direct contact with the user's face 51, the rigid device body 11 compresses the user's face 51. For this reason, it is possible to reduce the compression of the user's face 51 caused by the device body 11 by providing the cushion material 15 in the opposing part 11a.

The shape of the human face 51 varies but the shape of the device body 11 is fixed. For this reason, the shape of the device body 11 does not fit the shape of the user's face 51 depending on the user, and external light may enter through a gap between the opposing part 11a of the device body 11 and the user's face 51. This external light becomes a noise component and leads to a degradation in the quality of a display image. Accordingly, it is possible to reduce the influence of external light by filling a gap between the opposing part 11a and the user's face 51 with the cushion material 15 arranged at the peripheral edge of the opposing part 11a.

The hinge 20 is provided in the headband 30. The display device 10 is connected to the hinge 20. The hinge 20 is rotatably configured around a rotating shaft extending in the left-right direction, and the display device 10 is rotatably connected to the headband 30 via the hinge 20. For this reason, the display device 10 rotates in a relative manner with respect to the headband 30 around the rotating shaft of the hinge 20.

The hinge 20 is attached to the lower part of the headband 30 at the front-end side. In addition, the hinge 20 is connected to an upper surface 11c of the device body 11 of the display device 10. Accordingly, the display device 10 is suspended at the front end of the headband 30 via the hinge 20. The user can move the display device 10 away from the user's face 51 by rotating the display device 10 upward around the hinge 20. The user can also move the display device 10 closer to the user's face 51 to thereby bring the display device 10 into contact with the user's face 51 by rotating the display device 10 downward around the hinge 20. When the display device 10 is rotated downward, the user can smoothly rotate the display device 10 because a rotation moment described later acts on the display device 10.

The headband 30 is mounted on the user's head 50 and supports the display device 10. The headband 30 is an annular member and surrounds the entire circumference of the user's head 50, specifically the forehead constituting part of the user's face 51, the right side of the head, the back side of the head, and the left side of the head. The headband 30 has an adjustment mechanism that allows the circumferential length to be adjusted. This adjustment mechanism allows the user's head 50 to be tightened with appropriate force regardless of the size of the user's head 50, which in turn allows the display device 10 to be stably mounted on the head 50.

In the head-mounted display 1 according to present embodiment, the following two structures are adopted to suppress the influence of external light.

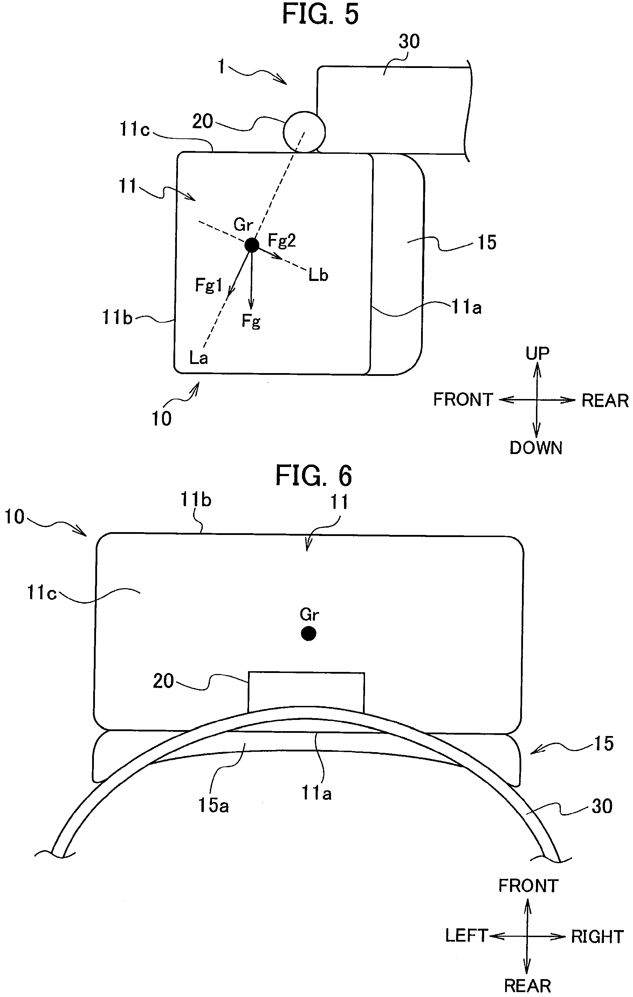

The first structure generates a rotation moment for pressing the display device 10 against the user's face 51. The first structure for generating a rotation moment will be described below with reference to FIGS. 5 and 6.

The center of gravity Gr of the display device 10 is set forward from the hinge 20, that is, set outward from the hinge 20 as viewed from the user's face 51. A force Fg corresponding to the weight of the display device 10 acts vertically downward on the center of gravity Gr of the display device 10. In this case, the force Fg can be considered separately as a first component force Fg1 along a line La passing through the center of gravity Gr from the rotation center of the display device 10 (that is, the rotation axis of the hinge 20) and a second component force Fg2 along a line Lb perpendicular to the line La. Of the first component force Fg1 and the second component force Fg2, the second component force Fg2 along the line Lb causes the rotation moment to act in the direction in which the display device 10 is pressed against the user's face 51.

Thus, the positional relationship between the center of gravity Gr of the display device 10 and the hinge 20 makes it possible to generate the rotation moment, which is caused by the weight of the display device 10, in the display device 10. This rotation moment allows the display device 10 to be pressed against the user's face 51, and thus the cushion material 15 can be brought into close contact with the user's face 51. This makes it possible to suppress a gap that has occurred between the cushion material 15 and the user's face 51, thereby making it possible to suppress the influence of external light.

The magnitude of the rotation moment depends on the weight of the display device 10. For this reason, it is possible to increase the force that presses the display device 10 against the user's face 51 by changing the specifications of the display device 10. However, the display device 10 needs to be mounted on the user's head 50 and placed in a position in front of the eyes. That is, since the display device 10 is placed far from the neck that supports the human head 50, even a slight increase in the weight of the display device 10 is a considerable burden on the user. Thus, it is preferable to set the magnitude of the rotation moment in consideration of the burden on the user.

In the present embodiment, the weight of the display device 10 is used as the structure for generating a rotation moment. The center of gravity Gr of the display device 10 is set forward from the hinge 20. However, the center of gravity Gr of the display device 10 may be set backward from the hinge 20 depending on the structure of the head-mounted display 1. For this reason, in a case where the attachment position of the hinge 20 with respect to the display device 10 can be adjusted, the attachment position may be adjusted such that the center of gravity Gr of the display device 10 is set forward from the hinge 20. According to the invention, by adding a center of gravity adjusting member such as a weight to the display device 10, the center of gravity of the composite body, which is configured of the display device 10 and the center of gravity adjusting member, is set forward from the hinge 20.

In addition, the structure for generating a rotation moment is not limited to being caused by the weight of the display device 10. For example, a torsion coil spring may be provided in the hinge 20, and a biasing force generated by the torsion coil spring may generate a rotation moment for pressing the display device 10 against the user's face 51.

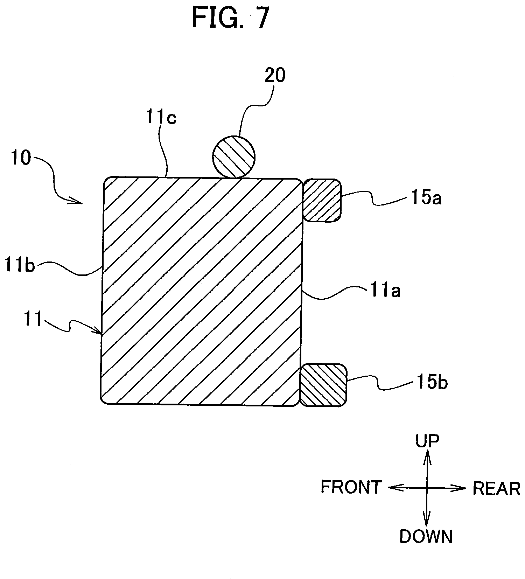

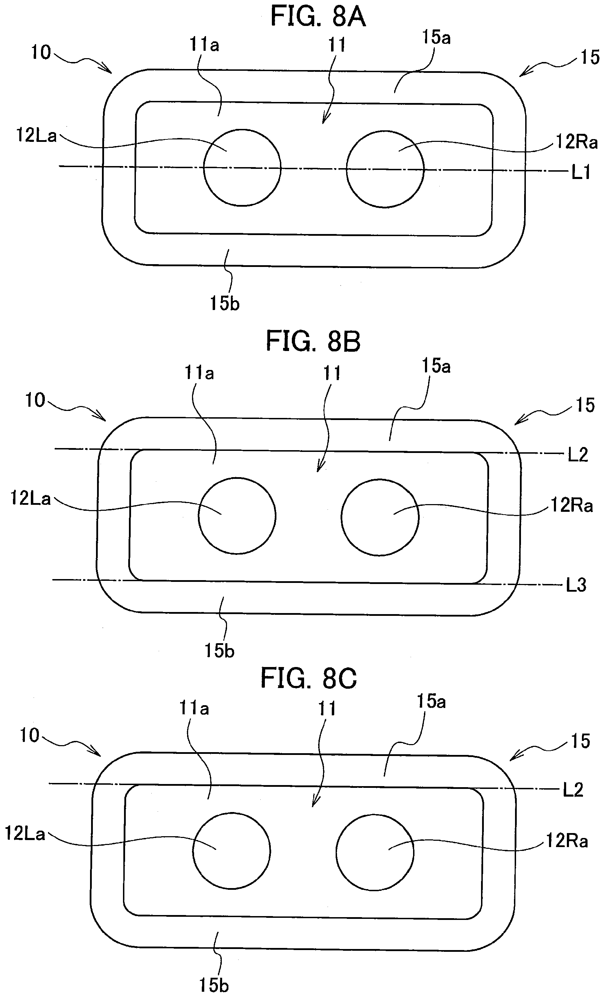

The second structure suppresses the incidence of external light by using the cushion material 15 regardless of the shape of the user's face 51, on the premise of the first structure that generates a rotation moment. The second structure that suppresses the incidence of external light by using the cushion material 15 will be described below with reference to FIGS. 7, 8A, 8B and 8C.

Since the lenses 12La and 12Ra that guide the display light to the user's eyes are arranged in the opposing part 11a of the device body 11, there is no cushion material 15 in the lenses 12La and 12Ra. As described above, the cushion material 15 is provided around the lenses 12La and 12Ra, specifically at the peripheral edge of the opposing part 11a. The cushion material 15 has a function of reducing the pressure on the user's face 51 and a function of suppressing the incidence of external light.

In the present embodiment, the cushion material 15 includes an upper cushion part 15a positioned at the upper part of the peripheral edge of the opposing part 11a and a lower cushion part 15b positioned below the upper cushion part 15a. When the upper cushion part 15a and the lower cushion part 15b are compared with each other, they have different elastic moduli and thicknesses. The reason why the elastic modulus and the thickness are different between the upper cushion part 15a and the lower cushion part 15b will be described below.

The display device 10 and the headband 30 are connected via the hinge 20. The rotation center of the display device 10 serves as the hinge 20, more specifically, the rotating shaft of the hinge 20. When a rotation moment is generated in the display device 10, the amount of movement at the upper part of the display device 10 near the hinge 20 is small. In contrast, the amount of movement at the lower part of the display device 10 far from the hinge 20 is large.

For example, in the display device 10, it is assumed that the elastic modulus and the thickness of the upper cushion part and the elastic modulus and the thickness of the lower cushion part are the same. In a case where the display device 10 is pressed against the user's face 51, if the upper cushion part comes into contact with the forehead of the user first, the rotation of the display device 10 is prevented by the force that the upper cushion part receives from the forehead. For this reason, the lower cushion part does not come into contact with the cheek of the user, or even if the lower cushion part comes into contact with the cheek of the user, the force acting on the cheek becomes weak. Accordingly, there is a possibility that external light enters through a gap between the lower cushion part and the user's face 51.

In view of the above circumstances, in the head-mounted display 1 according to the present embodiment, the elastic modulus and the thickness are different between the upper cushion part 15a and the lower cushion part 15b. Specifically, the lower cushion part 15b has a thickness that is set to be greater than that of the upper cushion part 15a. In addition, the lower cushion part 15b has an elastic modulus that is set to be the same as that of the upper cushion part 15a or smaller than that of the upper cushion part 15a.

The upper cushion part 15a is positioned at the upper part of the peripheral edge of the opposite part 11a, and is a part that is brought into contact with mainly the forehead of the user's face 51. In contrast, the lower cushion part 15b is positioned at the lower part of the peripheral edge of the opposite part 11a, and is a part that is brought into contact with mainly the cheek of the user's face 51. Specifically, the upper cushion part 15a and the lower cushion part 15b can be defined with reference to the lenses 12La and 12Ra that guide the display light to the user's eyes.

As illustrated in FIG. 8A, a boundary line L1 is defined with reference to the optical centers of the lenses 12La and 12Ra that guide the display light to the user's eyes. The cushion material 15 positioned above the boundary line L1 may be defined as the upper cushion part 15a, and the cushion material 15 positioned below the boundary line L1 may be defined as the lower cushion part 15b.

Further, as illustrated in FIG. 8B, a boundary line L2 is defined above the lenses 12La and 12Ra, and a boundary line L3 is defined below the lenses 12La and 12Ra. The cushion material 15 positioned above the boundary line L2 may be defined as the upper cushion part 15a, and the cushion material 15 positioned below the boundary line L3 may be defined as the lower cushion part 15b.

Further, as illustrated in FIG. 8C, the boundary line L2 is defined above the lenses 12La and 12Ra. The cushion material 15 positioned above the boundary line L2 may be defined as the upper cushion part 15a, and the cushion material 15 positioned below the boundary line L2 may be defined as the lower cushion part 15b.

Thus, the division between the upper cushion part 15a and the lower cushion part 15b is determined by considering the shape of the device body 11, an average face shape that is statistically derived, or the like.

The elastic moduli of the upper cushion part 15a and the lower cushion part 15b may be the same; however, when the elastic moduli of the upper cushion part 15a and the lower cushion part 15b are made to be different as described above, it is possible to actively make the amount by which the cushion material 15 compresses more different between the upper side and the lower side of the display device 10. That is, when the same force is applied, the amount by which the lower cushion part 15b compresses becomes greater than the amount by which the upper cushion part 15a compresses.

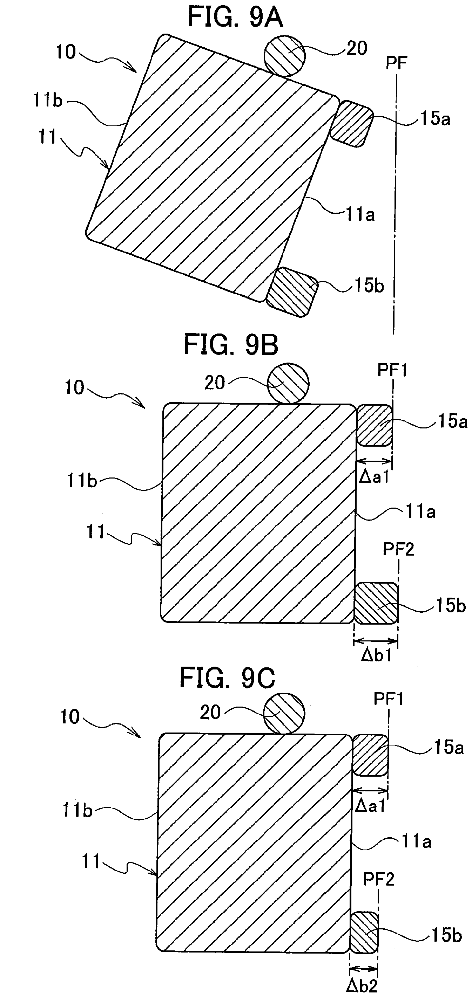

In FIG. 9A, "PF" is a line schematically illustrating the position of the user's face 51. When the display device 10 is pressed against the user's face 51, the user rotates the display device 10 downward around the hinge 20, that is, rotates the display device 10 counterclockwise in the figure.

For example, as illustrated in FIG. 9B, a face shape is assumed in which a forehead position PF1 is positioned forward from a cheek position PF2. The distance Δb1 between the opposing part 11a and the cheek position PF2 is longer than the distance Δa1 between the opposing part 11a and the forehead position PF1. As described above, and according to the invention as claimed, the lower cushion part 15b has a thickness that is set to be greater than that of the upper cushion part 15a. For this reason, even when the upper cushion part 15a is in contact with the forehead of the user, the distance Δb1 between the opposing part 11a and the cheek position PF2 can be satisfied by the thickness of the lower cushion part 15b. This makes it possible to suppress a gap between the lower cushion part 15b and the cheek, thereby making it possible to suppress the possibility that external light enters through a gap.

According to a non-claimed example, and as illustrated in FIG. 9C, a face shape is assumed in which the cheek position PF2 is positioned forward from the forehead position PF1. The distance Δb2 between the opposing part 11a and the cheek position PF2 is shorter than the distance Δa1 between the opposing part 11a and the forehead position PF1. As described above, the lower cushion part 15b has an elastic modulus that is set to be the same as that of the upper cushion part 15a or smaller than that of the upper cushion part 15a. For this reason, when the lower cushion part 15b receives a force from the cheek, the lower cushion part 15b can be compressed according to the distance Δb2 between the opposing part 11a and the cheek position PF2. In a case where the lower cushion part 15b has an elastic modulus greater than that of the upper cushion part 15a, it is hard for the lower cushion part 15b to be compressed, which prevents the rotation of the display device 10. For this reason, a gap may occur between the upper cushion part 15a and the forehead. In contrast, appropriate compression of the lower cushion part 15b allows the display device 10 to rotate until the upper cushion part 15a reaches the forehead, even if the lower cushion part 15b comes into contact with the cheek. This makes it possible to suppress a gap between the upper cushion part 15a and the forehead, thereby making it possible to suppress the possibility that external light enters through a gap.

In addition, in the configuration in which the display device 10 rotates around the hinge 20, the amount of movement at the upper part of the device body 11 is small, while the amount of movement at the lower part of the device body 11 is large. In this respect, in the cushion material 15 of the present embodiment, the elastic modulus of the upper cushion part 15a is large and the amount by which the upper cushion part 15a compresses is suppressed. Accordingly, even if the upper cushion part 15a is compressed, the amount of compression is small. For this reason, it is possible to suppress the amount of movement at the lower side of the device body 11. This makes it possible to adequately fill a gap between the opposing part 11a and the cheek in the range of the thickness to be set in the lower cushion part 15b.

Thus, according to the head-mount display 1 of the present invention, the lower cushion part 15b has a thickness that is set to be greater than that of the upper cushion part 15a. In addition, the lower cushion part 15b has an elastic modulus that is set to be the same as that of the upper cushion part 15a or smaller than that of the upper cushion part 15a. This makes it possible to suppress the influence of external light, thereby making it possible to improve the quality of a display image.

In addition, according to the present embodiment, the upper cushion part 15a is positioned above the left and right lenses 12La and 12Ra provided in the device body 11. This makes it possible to suppress the influence of external light and appropriately reduce the pressure on the forehead and cheeks of the user.

In addition, according to the present embodiment, the center of gravity Gr of the display device 10 is positioned forward from the hinge 20 and below the hinge 20. This makes it possible to appropriately generate a rotation moment for pressing the display device 10 against the user's face 51.

In the head-mounted display 1 according to the present embodiment, it is preferable that the elastic modulus and the thickness of the upper cushion part 15a and the lower cushion part 15b be different from each other. This makes it possible to suppress the influence of external light, thereby making it possible to improve the quality of a display image. However, the upper cushion part 15a and the lower cushion part 15b may have the same elastic modulus, and the upper cushion part 15a and the lower cushion part 15b may differ only in thickness.

The above embodiment which has been described in detail is not limited to the configuration described above, and may be a modified example to the extent that it does not deviate from the scope of the present invention as defined by the appended claims.

The present disclosure relates to the subject matter described in Japanese Patent Application No. 2020-145866 filed on August 31, 2020.

## Claims

1. A head-mounted display (1) comprising:
a headband (30) configured to be mounted on a head of a user;
a hinge (20) provided in the headband (30); and
a display device (10) that is rotatably connected to the headband (30) via the hinge (20) and configured to be brought into contact with a face of the user so as to cover eyes of the user, wherein
the display device (10) includes:
a device body (11) on which a rotational moment acts in a direction toward the face (51) of the user around the hinge (20);
a cushion material provided at a peripheral edge of an opposing part facing the face (51) of the user in the device body (11) to be brought into contact with the face (51) of the user; and
a center of gravity adjusting member configured to set the center of gravity of a composite body, which is configured of the display device and the center of gravity adjusting member, forward from the hinge, wherein
the cushion material (15) includes:
an upper cushion part (15a) positioned at an upper part of the peripheral edge of the opposing part; and
a lower cushion part (15b) positioned below the upper cushion part (15a), wherein
the lower cushion part (15b) has a thickness greater than that of the upper cushion part (15a).

2. The head-mounted display (1) according to claim 1 wherein
the lower cushion part (15b) has an elastic modulus that is the same as that of the upper cushion part (15a) or smaller than that of the upper cushion part (15a).

3. The head-mounted display (1) according to claim 1 or 2 wherein
the upper cushion part (15a) is positioned above left and right lenses (12La, 12Ra) that are arranged so as to be positioned in front of the eyes of the user.

4. The head-mounted display (1) according to any one of claims 1 to 3 wherein
a center of gravity (Gr) of the display device (10) is positioned forward from the hinge (20) and below the hinge (20).

## Patentansprüche

1. Am Kopf befestigte Anzeige (1), umfassend:
ein Kopfband (30), das konfiguriert ist, um an einem Kopf eines Benutzers befestigt zu werden;
ein Scharnier (20), das in dem Kopfband (30) bereitgestellt ist; und
eine Anzeigevorrichtung (10), die über das Scharnier (20) drehbar mit dem Kopfband (30) verbunden ist und konfiguriert ist, um mit einem Gesicht des Benutzers in Kontakt gebracht zu werden, um die Augen des Benutzers abzudecken, wobei
die Anzeigevorrichtung (10) beinhaltet:
einen Vorrichtungskörper (11), auf den ein Drehmoment in eine Richtung zu dem Gesicht (51) des Benutzers um das Scharnier (20) wirkt;
ein Polstermaterial, das an einer Umfangskante von einem gegenüberliegenden Teil bereitgestellt ist, das dem Gesicht (51) des Benutzers in dem Vorrichtungskörper (11) zugewandt ist, um mit dem Gesicht (51) des Benutzers in Kontakt gebracht zu werden; und
ein Schwerpunkteinstellelement, das konfiguriert ist, um den Schwerpunkt eines Verbundkörpers, der aus der Anzeigevorrichtung und dem Schwerpunkteinstellelement konfiguriert ist, vorwärts von dem Scharnier einzustellen, wobei
das Polstermaterial (15) beinhaltet:
ein oberes Polsterteil (15a), das an einem oberen Teil der Umfangskante des gegenüberliegenden Teils positioniert ist; und
ein unteres Polsterteil (15b), das unter dem oberen Polsterteil (15a) positioniert ist, wobei
das untere Polsterteil (15b) eine Dicke aufweist, die größer als die des oberen Polsterteils (15a) ist.

2. Am Kopf befestigte Anzeige (1) nach Anspruch 1, wobei
das untere Polsterteil (15b) ein Elastizitätsmodul aufweist, welches gleich ist zu jenem des oberen Polsterteils (15a) oder kleiner ist als jenes des oberen Polsterteils (15a).

3. Am Kopf befestigte Anzeige (1) nach Anspruch 1 oder 2, wobei
das obere Polsterteil (15a) über linken und rechten Linsen (12La, 12Ra) positioniert ist, die so angeordnet sind, um vor den Augen des Benutzers positioniert zu sein.

4. Am Kopf befestigte Anzeige (1) nach einem der Ansprüche 1 bis 3,
wobei ein Schwerpunkt (Gr) der Anzeigevorrichtung (10) vorwärts von dem Scharnier (20) und unter dem Scharnier (20) positioniert ist.

## Revendications

1. Visiocasque (1) comprenant :
un serre-tête (30) configuré pour être monté sur la tête d'un utilisateur ;
une charnière (20) prévue dans le serre-tête (30) ; et
un dispositif d'affichage (10) qui est relié de manière rotative au serre-tête (30) par l'intermédiaire de la charnière (20) et configuré pour être amené en contact avec le visage de l'utilisateur de manière à couvrir les yeux de l'utilisateur, dans lequel
le dispositif d'affichage (10) comprend :
un corps de dispositif (11) sur lequel un moment de rotation agit dans une direction vers le visage (51) de l'utilisateur autour de la charnière (20) ;
un matériau de coussin prévu au niveau d'un bord périphérique d'une partie opposée faisant face au visage (51) de l'utilisateur dans le corps de dispositif (11) pour être amené en contact avec le visage (51) de l'utilisateur ; et
un élément de réglage de centre de gravité configuré pour régler le centre de gravité d'un corps composite, qui est configuré du dispositif d'affichage et de l'élément de réglage de centre de gravité, vers l'avant à partir de la charnière, dans lequel
le matériau de coussin (15) comprend :
une partie de coussin supérieure (15a) positionnée au niveau d'une partie supérieure du bord périphérique de la partie opposée ; et
une partie de coussin inférieure (15b) positionnée sous la partie de coussin supérieure (15a), dans lequel
la partie de coussin inférieure (15b) a une épaisseur supérieure à celle de la partie de coussin supérieure (15a).

2. Visiocasque (1) selon la revendication 1, dans lequel
la partie de coussin inférieure (15b) a un module élastique qui est identique à celui de la partie de coussin supérieure (15a) ou inférieur à celui de la partie de coussin supérieure (15a).

3. Visiocasque (1) selon la revendication 1 ou 2, dans lequel
la partie de coussin supérieure (15a) est positionnée au-dessus de lentilles gauche et droite (12La, 12Ra) qui sont agencées de manière à être positionnées devant les yeux de l'utilisateur.

4. Visiocasque (1) selon l'une quelconque des revendications 1 à 3, dans lequel
un centre de gravité (Gr) du dispositif d'affichage (10) est positionné vers l'avant à partir de la charnière (20) et sous la charnière (20).
